# EUROPEAN PATENT SPECIFICATION

(11) **EP 4 756 153 B1**
(45) Date of publication and mention of the grant of the patent: **04.11.2026**
(21) Application number: 25216503.0
(22) Date of filing: 18.11.2025
(51) Int. Cl.: E04H 4/16

(54) **SWIMMING POOL ROBOT**
SCHWIMMBECKENROBOTER
ROBOT DE PISCINE

(30) Priority: 06.12.2024 WO PCT/CN2024/137628; 04.09.2025 US 202563875546 P
(43) Date of publication of application: 10.06.2026
(73) Proprietor: Xingmai Innovation Technology (Suzhou) Co., Ltd., Suzhou, Jiangsu 215124 (CN)
(72) Inventor: WANG, Shengle, Suzhou, 215124 (CN); BIAN, Minhao, Suzhou, 215124 (CN)
(74) Representative: Gulde & Partner

(56) References cited:
- EP-A1- 3 521 532
- CN-A- 114 278 129
- CN-U- 220 036 259

## Description

This application claims priority to International Patent Application No. PCT/CN2024/137628, filed with the World Intellectual Property Organization on December 6, 2024 and entitled "CLEANING SYSTEM, CLEANING DEVICE, STATION, AND CLEANING SYSTEM CONTROL METHOD".

This application claims priority to Provisional Patent Application No. US63/875,546, filed with the U.S. Patent and Trademark Office on September 4, 2025 and entitled "POOL ROBOT".

### TECHNICAL FIELD

This application relates to the cleaning field of robots, and specifically, to a swimming pool robot.

### BACKGROUND

Currently, when a swimming pool robot cleans a waterline on a wall of a swimming pool, the swimming pool robot moves laterally ("crab walk") along the waterline to clean the waterline. The swimming pool robot moves laterally along the waterline, and a roller brush of the swimming pool robot brushes the waterline. However, according to this cleaning manner, the swimming pool robot cannot move laterally along the waterline well, leading to a poor waterline cleaning effect. Alternatively, when the swimming pool robot moves along an edge of a bottom of the swimming pool or an edge of a water surface of the swimming pool, liquid in the swimming pool applies an action force to the swimming pool robot. Consequently, it is difficult for the swimming pool robot to move along the edge against the wall of the swimming pool, leading to a poor edge-following cleaning effect of the swimming pool robot.

Some prior arts can be seen in CN 114278129A and CN 220036259U, which disclose providing a water outlet on a side surface. EP 3521532A1 discloses a pool cleaning device with a sensor to acquire images and an illumination unit.

### SUMMARY

The invention is set out in the appended set of claims.

By providing the fluid spraying opening on the outer cover plate of one moving mechanism which at least covers the two moving wheels, it can provide an improved swimming pool robot. For example, it is particularly space-saving. For example, the lateral propulsion assembly can thereby has a better performance in cooperation with the wheels. For example, it can better drive the swimming pool robot to be attached to the wall of the swimming pool and move along an edge.

### BRIEF DESCRIPTION OF THE DRAWINGS

FIG. 1 is a schematic diagram of a structure of a swimming pool robot according to the present invention;
FIG. 2 is a bottom diagram of a structure of a swimming pool robot according to the present invention;
FIG. 3 is a schematic structural diagram of a longitudinal section of a swimming pool robot according to the present invention;
FIG. 4 is a schematic structural diagram of a cross section of a swimming pool robot according to the present invention;
FIG. 5 is a schematic diagram of another structure of a swimming pool robot according to the present invention; and
FIG. 6 is a schematic diagram of a swimming pool robot after some components are removed according to the present invention.

Reference numerals:
1000: swimming pool robot; 1001: body; 10011: front portion; 10012: rear portion; 10013: first accommodating cavity; 10013a: second liquid discharge opening; 10014: second accommodating cavity; 1002: first handle; 1003: first upper cover; 1005: second liquid outlet; 10051: third baffle plate; 1008: downward vision sensor; 1009: distance detection part; 1010: image capturing part; 1011: fill light; 1020: charging sheet/first coil; 1031: first water inlet; 1032: second water inlet; 1041: first water outlet; 1051: dust box/filtering box; 10511c: first baffle plate; 10511d: second baffle plate; 1052: second handle; 1061: main water pump; 1061a: main impeller; 1061b: main motor; 1061c: cover body; 1071: moving mechanism; 111: buoyancy cavity; 113: air inlet portion; 115: lateral propulsion assembly; 115a: lateral flow channel; 115b: lateral motor; 115c: lateral impeller; 115d: first opening; 115e: second opening; 116: first propeller; 117: track; 1173: annular region; 1174: outer cover plate; 1201: roller brush; 6000: electronic control box.

### DETAILED DESCRIPTION

The following clearly and completely describes the technical solutions in embodiments of the present invention with reference to the accompanying drawings in embodiments of the present invention. The described embodiments are merely a part rather than all of embodiments of the present invention. It should be noted that the terms "first", "second", and the like in the following embodiments are merely intended for a purpose of description, and shall not be understood as an indication or implication of relative importance or an implicit indication of a quantity of indicated technical features.

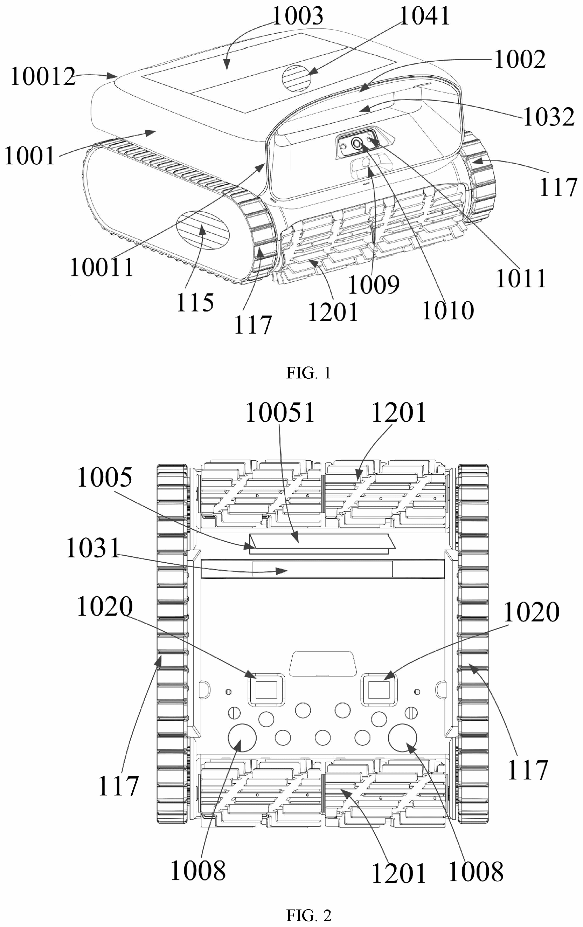

As shown in FIG. 1 to FIG. 6, this embodiment provides a swimming pool robot. The swimming pool robot includes a body 1001, a first handle 1002, a filtering box (which may also be expressed as a dust box), a power supply assembly, and a third baffle plate 10051. The filtering box is configured to filter liquid entering the filtering box.

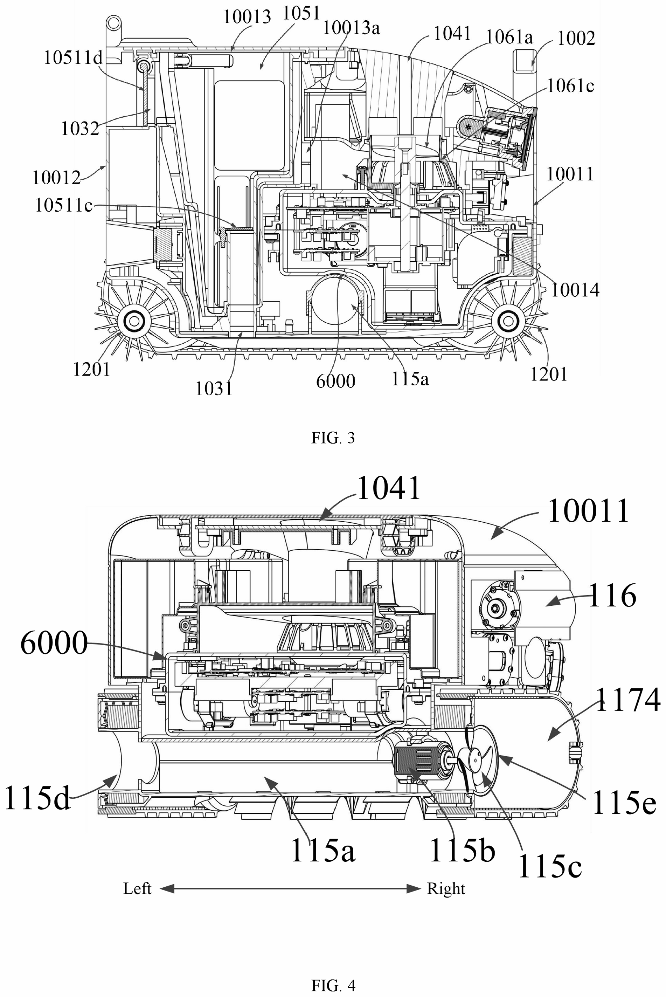

As shown in FIG. 3, the body 1001 (namely, the body of the swimming pool robot) includes a first accommodating cavity 10013 and a second accommodating cavity 10014. The filtering box is provided in the first accommodating cavity 10013. For example, a first upper cover 1003 is provided at a top of the body 1001, and the first upper cover 1003 is rotatably provided on a putting-in and taking-out opening on a top of the first accommodating cavity 10013. When the first upper cover 1003 is opened, a user places the filtering box into the first accommodating cavity 10013 or removes the filtering box from the first accommodating cavity 10013 through the putting-in and taking-out opening. In one embodiment, one end of the first upper cover 1003 is rotatably provided on the body 1001, and another end is connected to the body 1001 through a snap-fit structure or a magnetic attraction structure.

The first accommodating cavity is provided with at least one first liquid outlet. At least a part of the first liquid outlet is provided on a side wall of the first accommodating cavity 10013, or a majority of the first liquid outlet is provided on the side wall of the first accommodating cavity 10013, and a small part of the first liquid outlet is provided on a bottom of the first accommodating cavity 10013. A quantity of first liquid outlets is not limited and is selected based on an actual need. For example, there are a plurality of first liquid outlets, and the plurality of first liquid outlets form a grille structure.

The body is provided with at least one second liquid outlet 1005. In some embodiments, the second liquid outlet 1005 is provided on a bottom of the body 1001, or the second liquid outlet 1005 is provided on a side wall of the body, or the second liquid outlet is partially provided on the bottom of the body 10011 and partially provided on the side wall of the body. The second liquid outlet 1005 communicates with the first liquid outlet.

The third baffle plate 10051 is rotatably provided on the body 1001 and outside the body 1001 and has a first state in which the third baffle plate blocks the second liquid outlet 1005 and a second state in which at least a part of the third baffle plate does not block the second liquid outlet. For example, one end of the third baffle plate 10051 is rotatably provided on the body 1001, and another end is a free end. The third baffle plate 10051 rotates under an action force to block the second liquid outlet 1005, partially block the second liquid outlet 1005, or fully expose the second liquid outlet 1005.

In some embodiments, the third baffle plate 10051 is a rubber sheet or a soft rubber sheet. If a first action force is applied to an outer side of the third baffle plate 10051, and a second action force is applied to an inner side of the third baffle plate 10051, the first action force faces toward the first accommodating cavity, the second action force faces toward the outside of the body, and directions of the two action forces are opposite. When the first action force is greater than the second action force, the third baffle plate 10051 blocks the second liquid outlet 1005. When the first action force is less than the second action force, the third baffle plate 10051 rotates away from the second liquid outlet 1005 to not cover or expose the second liquid outlet 1005. Therefore, a motor does not need to be separately provided to drive the third baffle plate 10051 to rotate to block or not block the second liquid outlet 1005. This simplifies a structure of the swimming pool robot.

In one embodiment, a roller brush 1201 is provided on a rear end portion of the body 1001, and the second liquid outlet 1005 is partially provided on a side wall of the rear end portion of the body 1001 and partially provided on the bottom of the body 1001. Correspondingly, one end of the third baffle plate 10051 is provided on the side wall of the rear end portion of the body 1001, and the free end is located on the bottom of the body 1001. A part of the third baffle plate 10051 is provided between the roller brush and the body 1001. The roller brush 1201 may also be provided on a front end portion of the body. When the swimming pool robot is at a waterline of a wall of a swimming pool, the waterline may be brushed by the roller brush on the front end portion of the body or the roller brush on the rear end portion of the body. In one embodiment, there are a plurality of second liquid outlets 1005, and the plurality of second liquid outlets 1005 form a grille structure.

In some other embodiments, the second liquid outlet 1005 is provided on the side wall of the rear end portion of the body. Correspondingly, the third baffle plate is provided on the side wall of the rear end portion of the body. If the roller brush 1201 is provided on the rear end portion of the body, the third baffle plate is provided between the side wall of the rear end portion of the body and the roller brush. Alternatively, the second liquid outlet 1005 is provided on the bottom of the body 1001. Correspondingly, the third baffle plate 10051 is also provided on the bottom of the body.

The power supply assembly is provided inside the second accommodating cavity 10014. For example, the power supply assembly is a battery pack or another power structure. The battery pack is configured to supply power to the swimming pool robot.

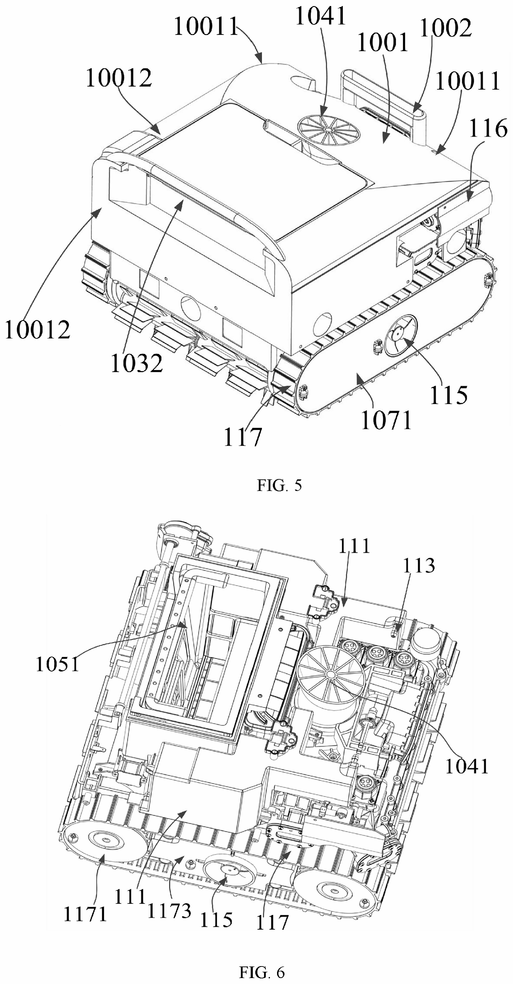

As shown in FIG. 1 and FIG. 5, the first handle 1002 is provided on the body 1001, so that the user conveniently holds the first handle 1002 to lift the swimming pool robot out of the swimming pool. In this way, the swimming pool robot leaves the swimming pool from a water surface of the swimming pool in a tilt posture, and the swimming pool robot is carried on a poolside. The first handle 1002 may be integrally molded on the body 1001 as a part of the body 1001, or the first handle 1002 may be detachably provided on the body 1001.

In some embodiments, the body 1001 includes a first end portion and a second end portion. When the swimming pool robot moves forward, the first end portion is located in front of the second end portion. In this case, the first end portion is considered as a front end portion of the body 1001, and the second end portion is considered as a rear end portion of the body 1001. As shown in FIG. 1 and FIG. 5, the first handle 1002 is provided on the first end portion of the body 1001, and in a direction from the first end portion to the second end portion, the first handle 1002, the second accommodating cavity, the filtering box, and the first liquid outlet are sequentially arranged on the body 1001 from front to back.

The swimming pool robot has a cleaning mode in which the swimming pool robot cleans the swimming pool and a water exit mode in which the swimming pool robot leaves the water surface of the swimming pool in the tilt posture.

When the swimming pool robot is in the swimming pool, because the first accommodating cavity 10013, the first liquid outlet, and the second liquid outlet 1005 remain in communication, liquid in the first accommodating cavity reaches the second liquid outlet 1005 and applies outward first pressure to the third baffle plate 10051, and liquid in the swimming pool applies second pressure to the third baffle plate 10051, where the second pressure faces toward the inside of the first accommodating cavity. The first pressure and the second pressure are equal and in opposite directions. However, when the swimming pool robot is in the cleaning mode, because a main water pump (mentioned below) operates, negative pressure is formed in the first accommodating cavity 10013 under the main water pump, so that the liquid in the swimming pool is sucked into the filtering box and is filtered by the filtering box. Due to the negative pressure in the first accommodating cavity 10013, the third baffle plate 10051 is tightly attached to the second liquid outlet 1005 to block the second liquid outlet 1005, so that the following case can be avoided: The liquid in the swimming pool enters the first accommodating cavity sequentially through the second liquid outlet 1005 and the first liquid outlet and then is discharged from the swimming pool robot after bypassing the filtering box and entering the main water pump, that is, the liquid entering the first accommodating cavity through the second liquid outlet and the first liquid outlet cannot be filtered by the filtering box, affecting a cleaning effect of the swimming pool robot.

Before the user lifts the swimming pool robot, the main water pump is usually turned off first, or after a sensor detects that the swimming pool robot leaves the water, a processor controls the main water pump to be turned off, and then the negative pressure formed in the first accommodating cavity 10013 is withdrawn. In other words, after the swimming pool robot leaves the water, the negative pressure formed in the first accommodating cavity 10013 is withdrawn. If the user needs to lift the swimming pool robot out of the swimming pool, the user holds the first handle 1002 to lift the swimming pool robot, and the swimming pool robot leaves the water surface of the swimming pool in the tilt posture, that is, the swimming pool robot is in the water exit mode. When the swimming pool robot just leaves the water, there is a large amount of liquid in the first accommodating cavity 10013. In a tilt direction of the swimming pool robot, the first handle 1002, the power supply assembly, the filtering box, and the first liquid outlet are sequentially arranged from top to bottom. Under gravity of the liquid in the first accommodating cavity 10013, the liquid in the first accommodating cavity 10013 flows from the first liquid outlet to the second liquid outlet 1005 to apply an outward action force to the third baffle plate 10051. Because the negative pressure in the first accommodating cavity 10013 is withdrawn, the third baffle plate 10051 rotates away from the second liquid outlet 1005 under the gravity, so that at least a part of the third baffle plate does not block the second liquid outlet, and the second liquid outlet 1005 is exposed. In this way, the liquid in the first accommodating cavity 10013 can be quickly discharged from the body 1001 through the first liquid outlet and the second liquid outlet 1005 to reduce a weight of the swimming pool robot. In this way, the user can conveniently carry the swimming pool robot on the poolside.

In other words, when the swimming pool robot is in the cleaning mode, the third baffle plate 10051 is in the first state and blocks the second liquid outlet 1005. When the swimming pool robot is in the water exit mode, the third baffle plate 10051 is in the second state, and the second liquid outlet 1005 is exposed or the second liquid outlet 1005 is partially blocked by the third baffle plate. In this case, the first accommodating cavity 10013, the first liquid outlet, and the second liquid outlet 1005 are sequentially in fluid communication, so that the liquid in the first accommodating cavity 10013 is discharged from the body 1001. In addition, when the swimming pool robot is in the water exit mode, the first handle, the power supply assembly, the filtering box, and the first liquid outlet are sequentially arranged from top to bottom in the tilt direction of the swimming pool robot.

In some embodiments, the first liquid outlet communicates with the second liquid outlet 1005 through a first flow channel. When the swimming pool robot is in the water exit mode, the liquid in the first accommodating cavity 10013 is discharged from the body 1001 sequentially through the first liquid outlet, the first flow channel, and the second liquid outlet 1005.

For example, the body 1001 includes a first inner housing and a first outer housing. An inner cavity of the first inner housing serves as the first accommodating cavity 10013. The first inner housing is provided inside the first outer housing. The first outer housing has the second accommodating cavity 10014. The second accommodating cavity 10014 is provided outside the first inner housing. The first liquid outlet is provided on a side wall of the first inner housing. The first outer housing is provided with the second liquid outlet 1005. The first liquid outlet communicates with the second liquid outlet 1005 through the first flow channel. The first flow channel is located between the first inner housing and the first outer housing.

Alternatively, a grille or a partition plate is provided inside the body, and the partition plate is provided with a second liquid discharge opening, so that the first accommodating cavity remains in communication with the second accommodating cavity. In this embodiment, the first flow channel is not provided to allow the first liquid outlet to communicate with the second liquid outlet, and both the first liquid outlet and the second liquid outlet directly communicate with the first accommodating cavity.

As shown in FIG. 3, the second accommodating cavity 10014 is closer to the first handle 1002 than the first accommodating cavity 10013. When the filtering box is provided inside the first accommodating cavity 10013, and the battery pack is provided inside the second accommodating cavity 10014, the battery pack is closer to the first handle 1002 than the filtering box, so that when the swimming pool robot is in the water exit mode, the first accommodating cavity 10013 and the first liquid outlet are closer to a rear portion of the body 1001. In this way, the liquid in the first accommodating cavity 10013 can be discharged from the swimming pool robot quickly and more easily.

As shown in FIG. 3, the swimming pool robot further includes a first water inlet 1031, a first water outlet 1041, and the main water pump. The first water inlet 1031 is provided on the bottom of the body 1001 or directly provided on a bottom of the dust box. The main water pump is provided inside the second accommodating cavity 10014. The first accommodating cavity 10013 communicates with the second accommodating cavity 10014 through at least one second liquid discharge opening 10013a. The first water outlet is at least partially provided on the top of the body 1001. The first water inlet 1031, the filtering box, the second liquid discharge opening 10013a, the main water pump, and the first water outlet are sequentially in fluid communication to form a cleaning water path. The battery pack is configured to supply power to the main water pump, avoids the cleaning water path, and is provided inside the second accommodating cavity 10014. For example, there are a plurality of second liquid discharge openings 10013a, and the plurality of second liquid discharge openings 10013a form a grille structure.

When the swimming pool robot is in the cleaning mode, the main water pump is in operation. Under driving of the main water pump, the liquid in the swimming pool enters the filtering box through the first water inlet 1031 to be filtered, garbage remains in the filtering box, and filtered liquid flows from the first accommodating cavity 10013 to the main water pump in the second accommodating cavity 10014 through the second liquid discharge opening 10013a, and is finally discharged from the swimming pool robot through the first water outlet. In this way, the swimming pool robot cleans the liquid in the swimming pool.

In some embodiments, a first baffle plate 10511c is provided at the first water inlet, and a second baffle plate 10511d is provided at the second water inlet. When the swimming pool robot performs water surface cleaning, the first baffle plate is in a closed state to prevent the liquid in the swimming pool from entering the filtering box through the first water inlet, and the second baffle plate is in an open state to allow the liquid to enter the filtering box through the second water inlet and a second inlet. When the swimming pool robot moves in the water or cleans a bottom or a wall of the swimming pool, the second baffle plate is in a closed state to prevent the liquid from entering the filtering box through the second water inlet, and the first baffle plate is in an open state to allow the liquid to enter the filtering box through the first water inlet and a first inlet. In other words, when the water surface is cleaned, the first baffle plate is in the closed state, and the second baffle plate is in the open state, and when the wall or the bottom of the swimming pool is cleaned, the first baffle plate is in the open state, and the second baffle plate is in the closed state.

There may be one or more first water inlets 1031, and a specific quantity of first water inlets is selected as required. There may be one or more first water outlets. For example, there is one first water outlet and one main water pump, or one main water pump corresponds to two or three first water outlets.

As shown in FIG. 1 and FIG. 3, in a forward direction of the swimming pool robot, the first liquid outlet, the filtering box 1051, the first water outlet, and the first handle 1002 are sequentially arranged from back to front, so that when the swimming pool robot is in the water exit mode, the first handle 1002, the first water outlet, the filtering box, and the first liquid outlet are sequentially arranged from top to bottom in the tilt direction of the swimming pool robot, enabling the first accommodating cavity 10013 and the first liquid outlet to be closer to the rear end portion of the body. In this way, the liquid in the first accommodating cavity 10013 can be quickly discharged from the body 1001 through the first liquid outlet and the second liquid outlet 1005.

In some embodiments, as shown in FIG. 2, the swimming pool robot further includes a group of charging sheets. The group of charging sheets includes two charging sheets 1020. Each charging sheet 1020 is provided on the bottom of the body 1001 and is connected to the battery pack. The battery pack is powered by an external power source through the charging sheet. The external power source may be a wired or wireless power source. The second liquid outlet 1005, the first water inlet 1031, and the charging sheet are sequentially arranged from back to front in the forward direction of the swimming pool robot. Therefore, when the swimming pool robot is in the water exit mode, in the tilt direction of the swimming pool robot, the charging sheet is located higher than the first water inlet 1031, and the first water inlet 1031 is located higher than the second liquid outlet 1005, so that the second liquid outlet 1005 is away from the charging sheet, and the liquid discharged through the second liquid outlet 1005 cannot flow to the charging sheet 1020. If there is residual liquid on the charging sheet 1020, the residual liquid flows downward in the tilt direction of the swimming pool robot. In this way, after the swimming pool robot leaves the water, the liquid is prevented from remaining on the charging sheet.

In some other embodiments, the swimming pool robot further includes a water baffle part. The water baffle part is provided outside at least one side of the first water inlet. When the swimming pool robot moves forward in the cleaning mode, the water baffle part can scrape off garbage remaining on the wall or the bottom of the swimming pool and block the liquid, enabling the liquid to be located around the first water inlet. In this way, blocked liquid can reach the first water inlet and be sucked into the filtering box to be filtered. This improves cleaning efficiency of the swimming pool robot.

In some other embodiments, one group of charging sheets may be replaced with a wireless coil. The coil serves as a first coil that receives electricity, and the external power source wirelessly charges the first coil through a second coil that discharges electricity.

In some other embodiments, the swimming pool robot further includes a downward vision sensor 1008 provided on the bottom of the body. As shown in FIG. 2, the downward vision sensor 1008 is provided in front of the first water inlet. The downward vision sensor is mainly configured to detect whether there is a slope, a step, and the like in the swimming pool and when the swimming pool robot is on the water surface, detect a distance between the swimming pool robot and the bottom of the swimming pool and identify whether there is a step or a tanning ledge in the swimming pool.

In some embodiments, as shown in FIG. 3, the main water pump includes a main motor 1061b and a main impeller 1061a, and an electronic control box 6000 and a cover body 1061c are further provided in the second accommodating cavity 10014. The electronic control box 6000 has a sealed cavity. The main motor 1061b is provided in the sealed cavity. An output shaft of the main motor 1061b extends out of the electronic control box 6000 and is connected to the main impeller 1061a. One end of the cover body 1061c sealingly covers the second liquid discharge opening 10013a, and the other end sealingly covers the first water outlet. The main impeller 1061a is provided inside the cover body 1061c. The liquid filtered by the filtering box first enters the cover body 1061c through the second liquid discharge opening 10013a and then is discharged through the first water outlet. In other words, the first water inlet 1031, the filtering box, the first accommodating cavity 10013, the second liquid discharge opening 10013a, the cover body 1061c or the main impeller 1061a, and the first water outlet are sequentially in fluid communication to form the cleaning water path.

In some other embodiments, the first accommodating cavity communicates with the second accommodating cavity through a grille structure. For example, an upper portion of the first accommodating cavity communicates with an upper portion of the second accommodating cavity through a grille structure, and a lower portion of the first accommodating cavity always communicates with a lower portion of the second accommodating cavity, or a partition plate is provided between the first accommodating cavity and the second accommodating cavity, and the partition plate is provided with a grille. The main impeller is provided inside the cover body. One end of the cover body communicates with the first water outlet, and the other end of the cover body always communicates with the second accommodating cavity. The liquid filtered by the filtering box first enters the second accommodating cavity, then is sucked into the cover body from the second accommodating cavity, and is finally discharged through the first water outlet. There are two electronic control boxes: a first electronic control box and a second electronic control box. The first electronic control box is configured to accommodate the main motor of the main water pump, and the second electronic control box is configured to accommodate the battery pack and a control board. The first electronic control box is fixed on a top of the second electronic control box and is located outside the second electronic control box.

In one embodiment, the battery pack avoids the cleaning water path. The battery pack needs to be waterproofed to avoid being in contact with the liquid, so that power supply performance of the battery pack cannot be affected. In one embodiment, the battery pack is provided in the sealed cavity of the electronic control box 6000 to avoid being in contact with the liquid, and the battery pack is connected to the main motor 1061b to supply power to the main motor 1061b. Alternatively, in another embodiment, a waterproof wrapping layer is provided outside the battery pack to prevent the battery pack from being in contact with the liquid, and the battery pack is provided inside the second accommodating cavity 10014 and outside the electronic control box 6000.

In some other embodiments, a control board is further provided inside the electronic control box 6000. The control board is connected to the main motor. The control board is configured to control the motor of the main water pump to be turned on or turned off or adjust an operating parameter of the main motor. For example, the operating parameter may be power, a rotation speed, and the like.

Alternatively, in some other embodiments, the swimming pool robot includes a moving mechanism 1071 configured to drive the swimming pool robot to move on the bottom or the wall of the swimming pool. For example, as shown in FIG. 6, the moving mechanism 1071 includes two moving wheels and a track 117 wrapped around the two moving wheels. A region (for example, an annular region 1173) is formed between the track and the two moving wheels. There are two moving mechanisms 1071, and the two moving mechanisms 1071 are respectively provided on two sides of the body 1001. Each moving mechanism 1071 is driven by a drive motor to rotate. The drive motor is provided inside the electronic control box 6000. The drive motor is connected to the control board. The control board is further configured to control the drive motor to be turned on or turned off or adjust an operating parameter. For example, the operating parameter may be power, a rotation speed, and the like.

The tilt posture of the swimming pool robot indicates that when the swimming pool robot is vertically projected onto a vertical plane, a connection line between rotation centers of the two moving wheels and an X-axis or a Z-axis form an included angle greater than 0° and less than or equal to 90°, or a moving surface (a lowermost surface) of the track of the swimming pool robot can be in contact with the bottom or the wall of the swimming pool, and the moving surface (or the lowermost surface of the track) and the horizontal plane or the vertical plane form an included angle. Correspondingly, the tilt direction of the swimming pool robot indicates an extension direction of the moving surface or the lowermost surface of the track when the swimming pool robot is in the tilt posture.

To facilitate removal of the filtering box 1051, a second handle 1052 is provided on the filtering box. The second handle is rotatably provided at a top opening of the filtering box, so that the user can conveniently hold the second handle to place the filtering box into the first accommodating cavity or remove the filtering box from the first accommodating cavity.

In another embodiment, when the swimming pool robot cleans or moves on the wall of the swimming pool, the main water pump operates, and the liquid continuously enters the filtering box through the first water inlet. Then, the liquid is continuously sprayed out from the main impeller of the main water pump and the first water outlet, and the sprayed liquid applies a first thrust toward the wall of the swimming pool to the swimming pool robot. In this way, the swimming pool robot can remain attached to the wall of the swimming pool under the first thrust.

As shown in FIG. 4, the swimming pool robot further includes a lateral propulsion assembly 115. The lateral propulsion assembly includes a lateral flow channel 115a provided on the body in a lateral direction. Two ends of the lateral flow channel 115a run through two side walls of the body, and communicate with the outside. Ports of the two ends of the lateral flow channel 115a respectively are a first opening 115d and a second opening 115e. One of the first opening 115d and the second opening 115e serves as a fluid inlet, and the other one of the first opening 115d and the second opening 115e serves as a fluid spraying opening.

The lateral propulsion assembly further includes a lateral impeller 115c and a lateral motor 115b configured to drive the lateral impeller 115c to rotate. Both the lateral impeller 115c and the lateral motor 115b are provided inside the lateral flow channel 115a.

The lateral motor 115b drives the lateral impeller 115c to rotate to drive the liquid in the swimming pool to enter the lateral flow channel through the fluid inlet. The liquid flows through the lateral impeller and is sprayed out through the fluid spraying opening to form a sprayed water flow away from a side portion of the body. The sprayed water flow applies a second thrust to the swimming pool robot. The second thrust may at least provide a thrust component in a lateral direction of the swimming pool robot for the swimming pool robot, to drive the swimming pool robot to move laterally on the wall of the swimming pool along the waterline to clean the waterline, or to drive the swimming pool robot to be attached to the bottom of the swimming pool or be close to the wall of the swimming pool and move along an edge to construct a map of the bottom of the swimming pool or clean the wall of the swimming pool along the edge in a process of moving along the edge, or to drive the swimming pool robot to be attached to the wall of the swimming pool and move along an edge of the water surface, so that the swimming pool robot constructs a map of the water surface or performs cleaning along the edge of the water surface in a process of moving along the edge.

In one embodiment, for example, as shown in FIG. 4, the lateral propulsion assembly 115 runs through two side surfaces of the swimming pool robot. One side surface is provided with the first opening 115d, and the other side surface is provided with the second opening 115e.

In some embodiments, the two ends of the lateral flow channel run through outer side surfaces of the two moving mechanisms of the swimming pool robot. The first opening is provided on one moving mechanism, and the second opening is provided on the other moving mechanism, so that the two ends of the lateral flow channel run through the moving mechanisms and communicate with the outside.

For example, the two ends of the lateral flow channel 115a are respectively located in regions (for example, annular regions 1173) of the two moving mechanisms without occupying other regions in the body, so that the swimming pool robot has a lateral propulsion function with a more compact structure and a smaller size.

In some embodiments, each moving mechanism includes two moving wheels and a track 117 wrapped around the two moving wheels. A region (for example, an annular region 1173) is formed between the track and the two moving wheels. There are two moving mechanisms 1071, and the two moving mechanisms 1071 are respectively provided on two sides of the body 1001. In this case, the two ends of the lateral flow channel are respectively located in regions (for example, annular regions 1173) of the two moving mechanisms, so that the lateral flow channel runs through the regions (for example, the annular regions 1173) of the two moving mechanisms and communicates with the outside without occupying other regions in the body, leading to a compact structure of the swimming pool robot. In addition, normal operation of the two moving wheels and normal operation of the track are not affected.

The two moving wheels are respectively expressed as a first moving wheel and a second moving wheel for ease of description. The moving mechanism further includes an outer cover plate 1174. The outer cover plate is provided on the body and at least blocks the first moving wheel and the second moving wheel to prevent the first moving wheel and the second moving wheel from being exposed, to protect the first moving wheel and the second moving wheel. In this way, the moving wheels are blocked, and normal operation of the track is not affected. Correspondingly, the first opening and the second opening of the lateral flow channel are respectively located on outer cover plates of the two moving mechanisms, so that the two ends of the lateral flow channel run through the outer cover plates of the two moving mechanisms (that is, the outer cover plate serves as the outer side surface of the moving mechanism) and communicate with the outside.

Further, in some other embodiments, each of the first opening and the second opening is provided with a grille. In this way, the following case can be avoided: Garbage or impurities in the swimming pool enter the lateral flow channel and wrap around the impeller, causing the impeller to get stuck, affecting normal rotation of the impeller. In addition, the grille is provided to guide liquid to flow into or flow out of the lateral flow channel.

Alternatively, in some other embodiments, when the moving mechanism includes the outer cover plate, the two ends of the lateral flow channel are respectively located in the regions (for example, the annular regions 1173) of the two moving mechanisms, and each outer cover plate is provided with an avoidance hole or an avoidance grille to expose the first opening and the second opening, so that the two ends of the lateral flow channel communicate with the outside.

In another embodiment, each of the first opening and the second opening is provided on one outer cover plate in a height direction of the swimming pool robot. In other words, in the height direction of the swimming pool robot, each of the first opening and the second opening is located within a range of one region (for example, one annular region 1173) without affecting normal operation of the track.

In some other embodiments, as shown in FIG. 5, the outer cover plate covers at least a part of the region (for example, the annular region 1173) in addition to the two moving wheels. For example, the outer cover plate blocks the region (for example, the annular region 1173), and the outer cover plate is provided with the first opening, the second opening, the avoidance hole, or the avoidance grille.

In other embodiments, the two ends of the lateral flow channel do not run through the two moving mechanisms and communicate with the outside. For example, when one of the first opening and the second opening serves as the fluid inlet, and the other one of the first opening and the second opening serves as the fluid spraying opening, the fluid spraying opening is provided on the moving mechanism, and the fluid inlet is not provided on the moving mechanism. For example, the fluid inlet communicates with the first accommodating cavity configured to accommodate the filtering box. When the lateral motor drives the lateral impeller to rotate, the liquid in the first accommodating cavity enters the lateral flow channel through the fluid inlet and then is sprayed out through the fluid spraying opening of the moving mechanism after flowing through the lateral impeller, to apply the second thrust to the swimming pool robot in the lateral direction. The fluid inlet may alternatively communicate with the second accommodating cavity. When the lateral motor drives the lateral impeller to rotate, the liquid in the second accommodating cavity enters the lateral flow channel through the fluid inlet and then is sprayed out through the fluid spraying opening of the moving mechanism after flowing through the impeller of the lateral flow channel, to apply the second thrust to the swimming pool robot in the lateral direction. The fluid inlet may alternatively communicate with other regions in the body, provided that when the lateral motor drives the lateral impeller to rotate, the liquid in the body enters the lateral flow channel through the fluid inlet and then is sprayed out through the fluid spraying opening of the moving mechanism after flowing through the impeller of the lateral flow channel.

When the swimming pool robot includes the lateral propulsion assembly, the swimming pool robot has a left edge-moving mode and a right edge-moving mode. The left edge-moving mode indicates that a left edge of the swimming pool robot is close to or tightly attached to an edge or a wall of the swimming pool. Similarly, the right edge-moving mode indicates that a right edge of the swimming pool robot is close to or tightly attached to an edge or a wall of the swimming pool.

For example, as shown in FIG. 4, when the swimming pool robot is in the left edge-moving mode, the first opening 115d serves as the fluid inlet, and the second opening 115e serves as the fluid spraying opening, to generate a greater second thrust toward a left side on a right side of the swimming pool robot. Optionally, the lateral impeller 115c and the lateral motor 115b are provided on a right side of the lateral flow channel 115a and close to the second opening, so that when the lateral motor rotates to drive the impeller to rotate, the second thrust toward the left side generated by the liquid sprayed out through the fluid spraying opening is maximized. In this way, a left side wall of the swimming pool robot is attached to the wall of the swimming pool as much as possible. This improves an edge-following moving effect. For example, the outer cover plate of the moving mechanism is closer or attached to the wall of the swimming pool to improve the edge-following moving effect of the swimming pool robot and accuracy of constructing a map along the edge.

For another example, when the swimming pool robot is in the right edge-moving mode, the first opening 115d serves as the fluid spraying opening, and the second opening 115e serves as the fluid inlet, to generate a greater second thrust toward the right side on the left side of the swimming pool robot. Optionally, the lateral impeller 115c and the lateral motor 115b are provided on a left side of the lateral flow channel 115a and close to the first opening, so that when the lateral motor rotates to drive the impeller to rotate, the second thrust toward the right side generated by the liquid sprayed out through the fluid spraying opening is maximized.

It should be noted that the lateral motor, the lateral impeller, the lateral flow channel, and the lateral propulsion assembly mentioned in any preceding embodiment are defined by the term "lateral" only for ease of description. Actually, the lateral motor is a motor, the lateral impeller is an impeller, the lateral flow channel is a flow channel, the lateral propulsion assembly is a propulsion assembly, and the term "lateral" has no special meaning.

In some other embodiments, regardless of whether the swimming pool robot is in the left edge-moving mode or the right edge-moving mode, the lateral impeller and the lateral motor may be provided on the left side of the lateral flow channel 115a and close to the first opening, provided at a middle position, or provided on the right side of the lateral flow channel and close to the second opening. A rotation direction of the lateral motor is changed to switch the swimming pool robot between the left edge-moving mode and the right edge-moving mode. For example, when the lateral motor 115b rotates in a forward direction, the liquid flows into the lateral flow channel through the first opening and is sprayed out toward the right side through the second opening, to apply the second thrust toward the left side to the swimming pool robot. In this way, the swimming pool robot is switched to the left edge-moving mode. In contrast, when the lateral motor 115b rotates in a reverse direction, the liquid flows into the lateral flow channel through the second opening and is sprayed out toward the left side through the first opening, to apply the second thrust toward the right side to the swimming pool robot. In this way, the swimming pool robot is switched to the right edge-moving mode.

When the swimming pool robot moves laterally along the waterline of the swimming pool, the swimming pool robot has a left waterline-laterally moving mode similar to the left edge-moving mode. In the left waterline-laterally moving mode, the lateral motor and the lateral impeller are provided inside the lateral flow channel in a same manner as that in the left edge-moving mode. Details are not described herein again. The swimming pool robot has a right waterline-laterally moving mode similar to the right edge-moving mode. In the right waterline-laterally moving mode, the lateral motor and the lateral impeller are provided inside the lateral flow channel in a same manner as that in the right edge-moving mode. Details are not described herein again.

Because the swimming pool robot includes the lateral propulsion assembly, when the swimming pool robot moves laterally on the wall of the swimming pool to clean the waterline, the lateral propulsion assembly applies the second thrust to the swimming pool robot in the lateral direction. Under the second thrust, the swimming pool robot can move at the waterline laterally and steadily. This improves the waterline cleaning effect.

In one embodiment, as shown in FIG. 4, the lateral propulsion assembly 115 is located below the electronic control box 6000 and accommodated in the second accommodating cavity, leading to a compact structure of the swimming pool robot. The first water inlet communicates with the first inlet on the bottom of the filtering box, and the first water inlet and the lateral flow channel are arranged in a staggered manner in the forward direction of the swimming pool robot. For example, if the lateral flow channel is located in front of the first water inlet in a direction in which the swimming pool robot moves forward on the bottom or the wall of the swimming pool, when both the main water pump and the lateral motor are turned on, the liquid in the swimming pool flows into the lateral flow channel, and the liquid in the lateral flow channel flows out. During this process, an amount of water entering the filtering box through the first water inlet is not affected. Alternatively, in another embodiment, the lateral flow channel is closer to the first handle than the first water inlet or the filtering box.

In some other embodiments, because the main water pump and the electronic control box are located in the second accommodating cavity, and the filtering box is located in the first accommodating cavity in the forward direction of the swimming pool robot, a weight of the second accommodating cavity is greater than a weight of the first accommodating cavity. In this way, a front portion of the swimming pool robot can be prevented from being lifted in a process of moving upward from a horizontal plane to a slope on the bottom of the swimming pool or a process of moving downward from the slope to the horizontal plane on the bottom of the swimming pool.

Alternatively, in some embodiments, the lateral propulsion assembly 115 is located inside or below the second accommodating cavity and is horizontally staggered with the electronic control box without increasing a height of the swimming pool robot. In addition, the lateral flow channel and the filtering box are horizontally arranged in a staggered manner, so that when the liquid flows into the lateral flow channel, and the liquid in the lateral flow channel flows out, the liquid in the swimming pool can still enter the filtering box through the first water inlet. This ensures that the swimming pool robot can clean the bottom, the wall, and the waterline of the swimming pool and has a lateral propulsion function.

In another embodiment, when the swimming pool robot is placed on the horizontal plane, at least a part of a first projection of the lateral flow channel on the horizontal plane is staggered with at least a part of a second projection of the filtering box on the horizontal plane. For example, the first projection is staggered with the second projection, so that the lateral propulsion assembly is provided on the swimming pool robot without affecting a volume of the filtering box for accommodating garbage. The first water inlet is provided on the bottom of the swimming pool robot and communicates with a bottom opening of the dust box, so that a third projection of the first water inlet on the horizontal plane is staggered with the second projection of the lateral flow channel, or at least a part of the third projection does not overlap with at least a part of the second projection.

The lateral direction may be defined as a direction pointed by a connection line between centers of the left side and the right side of the swimming pool robot 1000.

**In** some embodiments, when the swimming pool robot moves on the wall of the swimming pool, for example, cleans the waterline, the lateral propulsion assembly allows the swimming pool robot to move left or right on the wall of the swimming pool in the lateral direction to laterally clean the waterline. The swimming pool robot may further move up and down and move left or right. This improves movement flexibility of the swimming pool robot 1000.

**In** some embodiments, when the swimming pool robot moves on the wall of the swimming pool, both the main water pump and the lateral motor of the lateral propulsion assembly are turned on. The main water pump is mainly configured to generate the first thrust to enable the swimming pool robot to climb the wall of the swimming pool and prevent the swimming pool robot from falling off the wall of the swimming pool. The lateral propulsion assembly is mainly configured to generate the second thrust to enable the swimming pool robot to move laterally on the wall of the swimming pool along the waterline to clean the waterline.

**In** some embodiments, the swimming pool robot further includes the second water inlet 1032. The second water inlet is provided on a front portion 10011 (namely, a front housing) or a rear portion 10012 (namely, a rear housing) of the body (namely, the body of the swimming pool robot). The second water inlet 1032, the filtering box, the main impeller of the main water pump, and the first water outlet 1041 sequentially communicate to form a second water path for cleaning the water surface. In one embodiment, the second water inlet 1032 is provided on a front side wall of the body, and when the swimming pool robot performs water surface cleaning, the swimming pool robot moves forward to clean the water surface. In another embodiment, the second water inlet 1032 is provided on a rear side wall of the body, and when the swimming pool robot performs water surface cleaning, the swimming pool robot moves backward to clean the water surface.

The filtering box is provided with the first inlet 10511a and the second inlet 10511b. The first inlet communicates with the first water inlet, so that liquid under the water surface enters the filtering box through the first water inlet to be filtered. The second inlet communicates with the second water inlet, so that liquid on the water surface enters the filtering box through the second water inlet to be filtered.

The swimming pool robot further includes two first propellers 116. The two first propellers 116 are symmetrically provided on the two sides of the body. The first propeller includes a propulsion flow channel, an impeller, and a motor. One of openings at two ends of the propulsion flow channel is a front opening, and the other is a rear opening. When the swimming pool robot moves forward to clean the water surface, the motor drives the impeller to rotate, so that the liquid enters the propulsion flow channel through the front opening and is sprayed out through the rear opening after flowing through the impeller. Sprayed liquid applies a forward thrust to the swimming pool robot. Under the thrust, the swimming pool robot is driven to move on the water surface. Alternatively, impellers of the two first propellers are controlled to rotate at different speeds to drive the swimming pool robot to make a turn or rotate on the water surface.

When the swimming pool robot moves laterally on the wall of the swimming pool along the waterline to clean the waterline, both the main water pump and the lateral motor are turned on, and the two first propellers may also be turned on. The impellers of the two first propellers rotate at different speeds to apply an action force to the swimming pool robot in the lateral direction, to drive the swimming pool robot to move laterally or assist the swimming pool robot in moving laterally. In this way, the swimming pool robot can better move laterally to clean the waterline.

In some other embodiments, the swimming pool robot further includes a buoyancy cavity 111 and a pump provided inside the body. The buoyancy cavity is connected to an air inlet portion 113 through a pipeline, and the air inlet portion includes an air inlet. When the swimming pool robot stops at the waterline, the air inlet of the air inlet portion is exposed above the water surface, and external gas is driven to be sucked into or input through the air inlet to increase a volume of gas in the buoyancy cavity, so that gravity of the swimming pool robot is less than a buoyancy force. In this way, the swimming pool robot is switched from being attached to the wall of the swimming pool to floating on the water surface. When the swimming pool robot floats on the water surface, the two first propellers drive the swimming pool robot to move on the water surface to clean the water surface. The lateral propulsion assembly is provided, so that the swimming pool robot can better clean the water surface along the edge.

The swimming pool robot includes a control system. The control system may obtain various pieces of data information of the swimming pool robot 1000 and analyze and process the obtained data information to control various components of the swimming pool robot 1000. The control system may be, for example, a microcontroller, an embedded control system, or an application-specific integrated circuit (ASIC).

At least one distance detection part 1009 is provided on any side of the body. The distance detection part 1009 is configured to identify a distance between an object in a target region and the swimming pool robot. The distance detection part may be a TOF (Time of Flight)-based distance measurement sensor, ultrasonic sensor, line laser sensor, LDS, or the like. One or more distance detection parts may be provided on a single side of the body. If at least two distance detection parts are provided on the single side of the body, types of the different distance detection parts may be the same or different. For example, when two distance detection parts are provided on the single side of the body, one distance detection part is an infrared sensor, and the other distance detection part is an ultrasonic sensor, or both distance detection parts are infrared sensors, or both distance detection parts are ultrasonic sensors.

In one embodiment, the swimming pool robot 1000 further includes one or more image capturing parts 1010. The image capturing part 1010 is configured to capture an image of the target region, and the captured image is processed by a control assembly, to control an action or a behavior of the swimming pool robot 1000. The image capturing part may be a camera, a video camera, an imager, or the like. For example, the image capturing part 1010 is configured to shoot an environment of the target region and identify an image feature, so that functions such as localization, target identification, map construction, and obstacle avoidance are implemented based on the image feature. For example, a previous frame of shot image is compared with a next frame of shot image to correct a positioning error due to slipping or overturning of the swimming pool robot 1000, an accumulated error of an inertial measurement unit of the swimming pool robot 1000, or the like. In addition, pictures are continuously shot during operation of the swimming pool robot 1000. If the swimming pool robot 1000 determines that construction of the map is completed, and a same picture matches a history picture, the swimming pool robot 1000 may perform repositioning in a case where the swimming pool robot 1000 is lost. Furthermore, a specific target may be identified, and whether the specific target is garbage that needs to be cleaned or an obstacle that needs to be avoided is determined.

In one embodiment, the swimming pool robot includes three image capturing parts 1010. The three image capturing parts are spaced from each other in a horizontal direction. In one embodiment, sizes of lenses of the three image capturing parts are the same. In one embodiment, in the three image capturing parts 1010, a size of a lens of an image capturing part located in the middle is greater than sizes of lenses of image capturing parts located on two sides.

The distance detection part 1009 and/or the image capturing part 1010 are/is provided to plan a cleaning path of the swimming pool robot 1000 and prevent the swimming pool robot 1000 from climbing, slipping, overturning, or hitting an obstacle, so that the swimming pool robot 1000 can clean the target region regularly and safely. This effectively improves cleaning efficiency and a cleaning effect of the swimming pool robot 1000.

In some embodiments, in a process of moving to a start point of the planned cleaning path, the swimming pool robot may identify and clean garbage. This improves garbage cleaning efficiency.

In one embodiment, the distance detection part 1009 and the image capturing part 1010 are both configured to detect an obstacle, and the swimming pool robot performs obstacle avoidance based on a detection result. This reduces a probability that the swimming pool robot is hit, gets stuck, or goes through other abnormal situations in a moving process.

In one embodiment, the distance detection part 1009 is located below the image capturing part 1010 in the height direction of the swimming pool robot.

In one embodiment, the image capturing part 1010 is located below the second water inlet 1032 and above the distance detection part 1009 in the height direction of the swimming pool robot.

In one embodiment, the swimming pool robot 1000 further includes one or more fill lights. The fill light 1011 is configured to adjust brightness of a shot region of the image capturing part 1010.

In one embodiment, the swimming pool robot includes a plurality of fill lights 1011. The plurality of fill lights 1011 are provided around the image capturing part 1010. An example in which the image capturing part 1010 includes two fill lights 1011 is used for description. One fill light 1011 is provided on one side of the image capturing part 1010, and the other fill light 1011 is provided on another side of the image capturing part 1010.

In one embodiment, a center of at least one fill light 1011 and a center of the image capturing part 1010 may be at a same height.

In one embodiment, a center of at least one fill light 1011 and the center of the image capturing part 1010 may be at different heights.

The image capturing part 1010 and the fill light 1011 may be provided on any side surface of the body. For example, the image capturing part may face toward the forward direction of the swimming pool robot 1000. The image capturing part 1010 and the fill light 1011 may be located on a side of the body, and the side of the body is provided with the second water inlet 1032. When there is garbage within a field of view of the image capturing part 1010, the swimming pool robot 1000 may directionally move to a region in which the garbage is located and perform spot cleaning on the region. This improves the cleaning effect of the swimming pool robot 1000. In some embodiments, when there is the garbage within the field of view of the image capturing part 1010, the control assembly can position the garbage and plan a motion path based on a position of the garbage, and the swimming pool robot 1000 moves along the planned path, enabling the first water inlet 1031 and/or the second water inlet 1032 to be close to the garbage. When the second water inlet 1032 is close to the garbage, the second baffle plate 10511d at the second water inlet 1032 is opened to allow the garbage to be sucked into the filtering box 1051. In this case, a cleaning assembly does not need to be started to maximally save power. In addition, the swimming pool robot 1000 moves along the planned path, so that the garbage can be prevented from entering a dead zone of the image capturing part 1010.

In some embodiments, the control system can determine, based on a brightness degree of an image shot by the image capturing part 1010, a brightness degree of an environment in which the image capturing part 1010 is currently located, and adjust light supplement brightness of the fill light 1011 based on the brightness degree of the environment in which the swimming pool robot 1000 is currently located. Adjustment of the fill light 1011 may include turning on the fill light 1011, turning off the fill light 1011, increasing the brightness of the fill light 1011, and decreasing the brightness of the fill light 1011. For example, when the image capturing part 1010 is in a dim light or a backlight environment, the brightness of the fill light 1011 is increased based on a brightness degree of the light or a backlight degree to improve definition of the image shot by the image capturing part 1010. When the image capturing part 1010 is in a bright light environment, the fill light 1011 is turned off, or the brightness of the fill light 1011 is decreased to reduce power consumption of the swimming pool robot 1000 without affecting the definition of the image shot by the image capturing part 1010. In some embodiments, the control system can adjust an exposure parameter of the image capturing part 1010 based on an exposure degree of the image shot by the image capturing part 1010 to improve image quality of the image capturing part 1010.

In some embodiments, the fill light 1011 is turned off when at least one of the following conditions is met: The swimming pool robot is abnormal, a cleaning task is suspended, the cleaning task is completed, the swimming pool robot leaves the swimming pool, or a posture of the swimming pool robot is almost vertical, and a side, of the swimming pool robot, on which the fill light is located faces upward.

In some embodiments, the control system identifies a target object in a target region and a type of the target object based on the captured image, and implements a corresponding processing manner based on the type of the target object, such as performing obstacle avoidance, moving to perform cleaning, or moving to dock.

In some embodiments, if the target object is a fixed facility, for example, a ladder, a water discharge opening, a wall light, or a step, or an obstacle, for example, a toy or a stone, the swimming pool robot is controlled to perform obstacle avoidance and pass at a low speed. If the target object is a piece of garbage, for example, a leaf, or a platform, the swimming pool robot may be controlled to clean the target object. If the target object is an obstacle, for example, a station, the swimming pool robot is controlled to move to dock at the station after receiving a returning instruction.

In some embodiments, the control system identifies a size (or coverage) and/or a position of the target object in the target region based on the captured image, and determines an obstacle avoidance manner of the swimming pool robot based on the size and/or the position. For example, after the size and the position of the target object are identified, the swimming pool robot is controlled to bypass a region in which the target object is located, to implement accurate obstacle avoidance.

In some embodiments, when it is identified that the target object needs to be cleaned, a corresponding cleaning manner is performed based on a specific type of the target object. If the target object is identified as a cleanable type, the swimming pool robot may clean the object based on a preset cleaning strategy. For example, if the target object is a tanning ledge, because an area of an upper surface of the tanning ledge is large, the swimming pool robot may further clean the upper surface of the tanning ledge based on the preset cleaning strategy. If the target object is identified as garbage, the swimming pool robot may remove the garbage. Position information of the garbage may be obtained, and the swimming pool robot moves to a position of the garbage to remove the garbage. The position of the garbage is accurately determined, so that garbage removing accuracy and cleaning efficiency can be improved.

In some embodiments, when the type of the garbage is identified, the swimming pool robot may perform a cleaning strategy corresponding to the type of the garbage. For example, if the garbage is a leaf, because the leaf is easily pushed away by a water wave caused by movement of the swimming pool robot, the swimming pool robot may continue to move forward for a preset distance after reaching the position of the leaf, so that leaf removing effect can be improved. Alternatively, different cleaning strategies may be performed based on a distribution density of the garbage. For example, if the distribution density of the garbage in a region is greater than a preset density threshold, all the garbage in the region may be considered as aggregated garbage, and a cleaning region covering the aggregated garbage may be obtained through division as an aggregated garbage cleaning region. Then, a cleaning path may be planned for the aggregated garbage cleaning region, and the swimming pool robot may perform cleaning for a single time or perform reciprocating cleaning for a plurality of times for the aggregated garbage cleaning region along the planned cleaning path.

In some embodiments, the control system identifies a degree of turbidity of the water and/or a degree of dirtiness of the target region based on the captured image, and performs a corresponding cleaning manner based on the degree of turbidity of the water and/or the degree of dirtiness of the target region. The degree of turbidity of the water may include mild turbidity, moderate turbidity, and severe turbidity. The degree of dirtiness of the target region may include an amount of garbage, a distribution range of garbage, and a distribution density of garbage. For example, if there is a large amount of garbage in a specific range, the degree of dirtiness in this range is high; if the distribution density of garbage is high in a specific range, the degree of dirtiness in this range is high; and if a ratio of a distribution range of garbage in a specific range to the specific range is large, the degree of dirtiness in this range is high. Standards for defining the degree of turbidity of the water and the degree of dirtiness of the target region are not limited herein.

A corresponding cleaning mode may be performed based on the degree of turbidity of the water. For example, when the water is severely turbid, a quantity of cleaning times or cleaning power of the swimming pool robot is increased (for example, a quantity of rotations of the roller brush or power of the main water pump is increased). A corresponding cleaning manner is performed based on the degree of dirtiness of the target region. For example, the quantity of cleaning times or the cleaning power of the swimming pool robot is increased for a region with a high degree of dirtiness, or the swimming pool robot focuses on cleaning the region with the high degree of dirtiness and cleans a region with a low degree of dirtiness less often or does not clean the region with the low degree of dirtiness in a cleaning process, to reduce power consumption in the cleaning process.

In some embodiments, one or more of the type of the target object, a quantity of target objects, the position of the target object, the size of the target object, and the distribution range of the target object, the degree of turbidity of the water, or the degree of dirtiness of the target region, and a cleaned state of the target object (for example, a state in which the target object is to be cleaned, the target object is being cleaned, or the target object has been cleaned) may be displayed in an interface of an APP.

In some embodiments, the control system may construct a map of the swimming pool based on the captured image and update the identified target object on the map in real time during operation. This improves map construction effectiveness. The map is displayed in the interface of the APP.

In some embodiments, the swimming pool robot records information such as the type, the size, and the position of the target object identified based on the captured image, and plans a cleaning path, an obstacle avoidance path, and the like based on the information.

In some embodiments, the swimming pool robot determines, based on the captured image, whether the garbage has been cleaned, and then cleans other regions or other garbage after cleaning garbage in a specific region or specific garbage. This improves garbage cleaning effectiveness.

In some embodiments, the swimming pool robot may track garbage by using the image capturing part. This avoids a case where the garbage enters the dead zone of the image capturing part 1010, causing the garbage to fail to be cleaned.

In some embodiments, the image capturing part remains on during operation of the swimming pool robot.

In some embodiments, the swimming pool robot moves to clean garbage after identifying the garbage based on the image captured by the image capturing part, and after completing cleaning, the swimming pool robot may move randomly or along a preset path until the swimming pool robot identifies garbage again.

In some embodiments, the image capturing part 1010 is turned on in a specific cleaning mode. The specific cleaning mode may be executed independently after being enabled or may be executed after a conventional cleaning mode ends. This is not limited herein. The conventional cleaning mode is a mode in which the image capturing part 1010 is turned off.

In some embodiments, the specific cleaning mode is a mode in which the swimming pool robot 1000 cruises and cleans the target region along a preset cleaning path, for example, a bow-shaped path (the bow-shaped path means that two adjacent paths are parallel to each other, and the swimming pool robot moves along the two adjacent paths in two opposite forward directions) or a square spiral path. If in a process of cruising and performing cleaning, it is determined that there is a specific target in the target region, for example, a leaf, the swimming pool robot moves to the specific target to perform cleaning and after completing cleaning, the swimming pool robot 1000 may move backward to return to an original cleaning path and continue to cruise along the preset cleaning path. Whether cleaning of the specific target is completed may be determined in a plurality of manners. For example, the control system may directly identify whether the target has been cleaned, or a determining condition may be preset, and if the condition is met, it is considered that cleaning is completed. For example, the determining condition is a time condition, and if the swimming pool robot 1000 stays at the specific target for preset time, it is considered that cleaning is completed. Specific content of the determining condition is not limited herein.

In some embodiments, when the swimming pool robot is in the specific cleaning mode, a spacing between adjacent sub-paths of the preset cleaning path may be dynamically adjusted. For example, if the swimming pool robot does not identify garbage on a consecutive preset quantity of adjacent sub-paths, the swimming pool robot 1000 is controlled to expand the spacing between adjacent to-be-cruised sub-paths. For example, the spacing is adjusted from a first path spacing to a second path spacing, and the second path spacing is greater than the first path spacing. If the swimming pool robot identifies the garbage on the consecutive preset quantity of adjacent sub-paths or identifies a plurality of pieces of garbage on a single sub-path, the swimming pool robot 1000 is controlled to adjust the spacing between the adjacent to-be-cruised sub-paths from the second path spacing to the first path spacing or any spacing less than the second path spacing. In this way, cleaning effectiveness can be improved, and the cleaning efficiency can also be improved.

In some embodiments, when the swimming pool robot is in the specific cleaning mode, a stop condition is included. The stop condition may be completion of cruising of the target region or end time of cleaning estimated based on an area of the target region. The area of the target region may be estimated after a map of the target region is constructed.

In some embodiments, when the swimming pool robot is in the specific cleaning mode, a platform cleaning function is further performed. A platform may be a surface in the target region, and the surface is higher than the bottom of the swimming pool and has a step. For example, a process of cleaning the platform includes: After the swimming pool robot 1000 identifies the platform based on the image captured by the image capturing part in the process of cruising and performing cleaning, the swimming pool robot 1000 may be controlled to directly move to the platform to perform cleaning, or position information of the platform may be recorded, and after cruising and cleaning are completed, the swimming pool robot 1000 may be controlled, based on information of an end position, to move to the recorded platform to perform cleaning. The position information of the recorded platform may be coordinate information of the platform in the constructed map of the target region or may be another positioning information. A manner in which the swimming pool robot 1000 moves to the platform may be that the swimming pool robot 1000 is controlled to move along the bow-shaped path in a direction from the end position to a recorded position of the platform until the swimming pool robot 1000 is close to the platform, or the swimming pool robot 1000 may directly plan a path and move to the platform based on information of the recorded position and information of the end position. This is not limited herein.

In some embodiments, after reaching the platform, the swimming pool robot 1000 may climb upward from a step of the platform until the swimming pool robot 1000 moves to a surface of the platform, and then clean the surface of the platform. If an area of the current platform is less than a preset moveable area of the swimming pool robot 1000, for example, an area of the bottom of the swimming pool robot 1000, and there are also other steps on the platform, the swimming pool robot 1000 may be controlled to continue to climb until cleaning of a specific surface of the platform is completed. After cleaning is completed, the swimming pool robot 1000 may move backward or turn around to leave the platform to perform subsequent operations, for example, moving to a next recorded platform, continuing to perform another cleaning task, or returning to a specific position.

In some embodiments, whether to turn on the image capturing part 1010 or whether to clean garbage based on an image captured by the image capturing part when the image capturing part is turned on may be determined by a user. For example, a function button is provided on a communication device connected to the swimming pool robot 1000 or on the body, and a function corresponding to the image capturing part 1010 is enabled or disabled by using the button. Alternatively, the swimming pool robot 1000 determines an environment of the target region and/or a parameter of the swimming pool robot 1000, to determine whether to turn on the image capturing part 1010. For example, if a preset condition is met, for example, the environment of the target region is complex, or a remaining battery level of the swimming pool robot 1000 is insufficient to support turning-on of the image capturing part 1010 in the target region, the image capturing part 1010 is turned off. In this way, cleaning flexibility and efficiency can be improved.

## Claims

1. A swimming pool robot (1000), comprising:
a body (1001);
two moving mechanisms (1071) provided on two sides of the body, wherein each moving mechanism comprises:
two moving wheels;
a track (117) wrapped around the two moving wheels; and
an outer cover plate (1174), wherein the outer cover plate is configured to at least cover the two moving wheels; and
a lateral propulsion assembly (115), wherein the lateral propulsion assembly comprises:
a lateral flow channel (115a) provided with a fluid inlet (115d) and a fluid spraying opening (115e);
a lateral impeller (115c) provided inside the lateral flow channel; and
a lateral motor (115b) configured to drive the lateral impeller to rotate,
**characterized in that**
the fluid spraying opening (115e) is provided on the outer cover plate (1174) of one moving mechanism, or the outer cover plate (1174) of one moving mechanism is provided with an opening, enabling the fluid spraying opening (115e) to communicate with the outside through the opening.

2. The swimming pool robot according to claim 1, wherein the fluid inlet is provided on the other moving mechanism, so that the lateral flow channel runs through the two moving mechanisms,
wherein a region is formed between the track and the two moving wheels; and
the lateral flow channel is at least partially located in the region.

3. The swimming pool robot according to claim 2, wherein the fluid inlet is provided on the outer cover plate of the other moving mechanism, or the outer cover plate of the other moving mechanism is provided with an avoidance hole or an avoidance grille, so that the fluid inlet communicates with the outside through the avoidance hole or the avoidance grille.

4. The swimming pool robot according to claim 1, wherein a region is formed between the track and the two moving wheels, and the lateral flow channel is at least partially located in the region.

5. The swimming pool robot according to claim 4, wherein when the swimming pool robot is projected onto a vertical surface in a direction from a left side of the swimming pool robot to a right side of the swimming pool robot or in a lateral direction of the swimming pool robot, a projection of the opening falls within a projection of the region, or a projection of the fluid spraying opening falls within the projection of the region.

6. The swimming pool robot according to any one of claims 4 to 5, wherein the outer cover plate is further configured to cover at least a part of the region.

7. The swimming pool robot according to any one of claims 4 to 6, wherein the opening is an avoidance hole or an avoidance grille.

8. The swimming pool robot according to any one of claims 1 to 7, wherein the body comprises a first accommodating cavity (10013), and the swimming pool robot further comprises a filtering box (1051) at least partially provided inside the first accommodating cavity, wherein the fluid inlet communicates with the first accommodating cavity, enabling liquid in the first accommodating cavity to enter the lateral flow channel.

9. The swimming pool robot according to any one of claims 1 to 7, wherein the body comprises a first accommodating cavity (10013) and a second accommodating cavity (10014), and the swimming pool robot further comprises a filtering box at least partially provided inside the first accommodating cavity and a main water pump (1061) provided inside the second accommodating cavity, wherein
the main water pump is configured to drive liquid in a swimming pool to enter the filtering box to be filtered and drive filtered liquid to be discharged from the body; and
the fluid inlet communicates with the second accommodating cavity, enabling liquid in the second accommodating cavity to enter the lateral flow channel.

10. The swimming pool robot according to any one of claims 1 to 7, wherein the body comprises a second accommodating cavity, and the swimming pool robot further comprises a power supply assembly provided inside the second accommodating cavity, wherein
the power supply assembly is configured to supply power to the swimming pool robot; and
the fluid inlet communicates with the second accommodating cavity, enabling liquid in the second accommodating cavity to enter the lateral flow channel.

11. The swimming pool robot according to any one of claims 1 to 10, wherein the fluid spraying opening is provided with a grille.

12. The swimming pool robot according to any one of claims 1 to 7, further comprising:
a filtering box at least partially provided inside the body;
a first water inlet (1031) provided on a bottom of the body;
a first water outlet (1041) at least partially provided on a top of the body; and
a main water pump provided inside the body, wherein
the first water inlet, the filtering box, the main water pump, and the first water outlet are sequentially in fluid communication to form a cleaning water path.

13. The swimming pool robot according to any one of claims 1 to 12, further comprising:
at least one image capturing part (1010) configured to capture an image;
at least one distance detection part (1009) configured to at least detect a distance between the swimming pool robot and an object, wherein the at least one distance detection part is located below the at least one image capturing part in a height direction of the swimming pool robot; and
at least one fill light (1011) configured to at least adjust brightness of a shot region of the at least one image capturing part, wherein the at least one fill light is close to the at least one image capturing part.

14. The swimming pool robot according to any one of claims 1 to 8, further comprising a main water pump, wherein the main water pump comprises:
a main impeller (1061a) provided inside the body; and
a main motor (1061b) configured to drive the main impeller to rotate, wherein when the swimming pool robot is in a cleaning mode, the main water pump operates.

## Patentansprüche

1. Schwimmbeckenroboter (1000), umfassend:
einen Körper (1001);
zwei Bewegungsmechanismen (1071), die auf zwei Seiten des Körpers bereitgestellt sind, wobei jeder Bewegungsmechanismus Folgendes umfasst:
zwei Bewegungsräder;
eine Schiene (117), die um die zwei Bewegungsräder gewickelt ist; und
eine äußere Abdeckplatte (1174), wobei die äußere Abdeckplatte dazu konfiguriert ist, mindestens die zwei Bewegungsräder abzudecken; und
eine seitliche Vortriebsbaugruppe (115), wobei die seitliche Vortriebsbaugruppe Folgendes umfasst:
einen seitlichen Strömungskanal (115a), der mit einem Fluideinlass (115d) und einer Fluidsprühöffnung (115e) versehen ist;
ein seitliches Pumpenrad (115c), das innerhalb des seitlichen Strömungskanals bereitgestellt ist; und
einen seitlichen Motor (115b), der dazu konfiguriert ist, das seitliche Pumpenrad anzutreiben, damit es sich dreht,
**dadurch gekennzeichnet, dass**
die Fluidsprühöffnung (115e) an der äußeren Abdeckplatte (1174) eines Bewegungsmechanismus bereitgestellt ist
oder die äußere Abdeckplatte (1174) eines Bewegungsmechanismus mit einer Öffnung versehen ist, die es der Fluidsprühöffnung (115e) ermöglicht, durch die Öffnung mit der Außenseite in Verbindung zu stehen.

2. Schwimmbeckenroboter nach Anspruch 1, wobei der Fluideinlass an dem anderen Bewegungsmechanismus bereitgestellt ist, sodass der seitliche Strömungskanal durch die zwei Bewegungsmechanismen verläuft,
wobei eine Region zwischen der Schiene und den zwei Bewegungsrädern ausgebildet ist; und
der seitliche Strömungskanal mindestens teilweise in der Region liegt.

3. Schwimmbeckenroboter nach Anspruch 2, wobei der Fluideinlass an der äußeren Abdeckplatte des anderen Bewegungsmechanismus bereitgestellt ist oder die äußere Abdeckplatte des anderen Bewegungsmechanismus mit einem Vermeidungsloch oder einem Vermeidungsgitter versehen ist, sodass der Fluideinlass durch das Vermeidungsloch oder das Vermeidungsgitter mit der Außenseite in Verbindung steht.

4. Schwimmbeckenroboter nach Anspruch 1, wobei eine Region zwischen der Schiene und den zwei Bewegungsrädern ausgebildet ist und der seitliche Strömungskanal mindestens teilweise in der Region liegt.

5. Schwimmbeckenroboter nach Anspruch 4, wobei, wenn der Schwimmbeckenroboter auf eine vertikale Oberfläche in einer Richtung von einer linken Seite des Schwimmbeckenroboters zu einer rechten Seite des Schwimmbeckenroboters oder in einer seitlichen Richtung des Schwimmbeckenroboters projiziert wird, eine Projektion der Öffnung in eine Projektion der Region fällt oder eine Projektion der Fluidsprühöffnung in die Projektion der Region fällt.

6. Schwimmbeckenroboter nach einem der Ansprüche 4 bis 5, wobei die äußere Abdeckplatte ferner dazu konfiguriert ist, mindestens einen Teil der Region abzudecken.

7. Schwimmbeckenroboter nach einem der Ansprüche 4 bis 6, wobei die Öffnung ein Vermeidungsloch oder ein Vermeidungsgitter ist.

8. Schwimmbeckenroboter nach einem der Ansprüche 1 bis 7, wobei der Körper einen ersten Unterbringungshohlraum (10013) umfasst und der Schwimmbeckenroboter ferner einen mindestens teilweise innerhalb des ersten Unterbringungshohlraums bereitgestellten Filterkasten (1051) umfasst, wobei der Fluideinlass mit dem ersten Unterbringungshohlraum in Verbindung steht, was es Flüssigkeit in dem ersten Unterbringungshohlraum ermöglicht, in den seitlichen Strömungskanal einzutreten.

9. Schwimmbeckenroboter nach einem der Ansprüche 1 bis 7, wobei der Körper einen ersten Unterbringungshohlraum (10013) und einen zweiten Unterbringungshohlraum (10014) umfasst und der Schwimmbeckenroboter ferner einen mindestens teilweise innerhalb des ersten Unterbringungshohlraums bereitgestellten Filterkasten und eine innerhalb des zweiten Unterbringungshohlraums bereitgestellte Hauptwasserpumpe (1061) umfasst, wobei
die Hauptwasserpumpe dazu konfiguriert ist, Flüssigkeit in einem Schwimmbecken anzutreiben, damit sie in den Filterkasten eintritt, um filtriert zu werden, und filtrierte Flüssigkeit antreibt, damit sie aus dem Körper abgelassen wird; und
der Fluideinlass mit dem zweiten Unterbringungshohlraum in Verbindung steht, was es Flüssigkeit in dem zweiten Unterbringungshohlraum ermöglicht, in den seitlichen Strömungskanal einzutreten.

10. Schwimmbeckenroboter nach einem der Ansprüche 1 bis 7, wobei der Körper einen zweiten Unterbringungshohlraum umfasst und der Schwimmbeckenroboter ferner eine innerhalb des zweiten Unterbringungshohlraums bereitgestellte Leistungsversorgungsbaugruppe umfasst, wobei
die Leistungsversorgungsbaugruppe dazu konfiguriert ist, den Schwimmbeckenroboter mit Leistung zu versorgen; und
der Fluideinlass mit dem zweiten Unterbringungshohlraum in Verbindung steht, was es Flüssigkeit in dem zweiten Unterbringungshohlraum ermöglicht, in den seitlichen Strömungskanal einzutreten.

11. Schwimmbeckenroboter nach einem der Ansprüche 1 bis 10, wobei die Fluidsprühöffnung mit einem Gitter versehen ist.

12. Schwimmbeckenroboter nach einem der Ansprüche 1 bis 7, ferner umfassend:
einen Filterkasten, der mindestens teilweise innerhalb des Körpers bereitgestellt ist;
einen ersten Wassereinlass (1031), der an einer Unterseite des Körpers bereitgestellt ist;
einen ersten Wasserauslass (1041), der mindestens teilweise an einer Oberseite des Körpers bereitgestellt ist; und
eine Hauptwasserpumpe, die innerhalb des Körpers bereitgestellt ist, wobei der erste Wassereinlass, der Filterkasten, die Hauptwasserpumpe und der erste Wasserauslass nacheinander in Fluidverbindung stehen, um einen Reinigungswasserweg auszubilden.

13. Schwimmbeckenroboter nach einem der Ansprüche 1 bis 12, ferner umfassend:
mindestens einen Bilderfassungsteil (1010), der dazu konfiguriert ist, ein Bild zu erfassen;
mindestens einen Abstandsdetektionsteil (1009), der dazu konfiguriert ist, mindestens einen Abstand zwischen dem Schwimmbeckenroboter und einem Objekt zu detektieren, wobei der mindestens eine Abstandsdetektionsteil unterhalb des mindestens einen Bilderfassungsteils in einer Höhenrichtung des Schwimmbeckenroboters liegt; und
mindestens ein Fülllicht (1011), das dazu konfiguriert ist, mindestens eine Helligkeit einer Aufnahmeregion des mindestens einen Bilderfassungsteils einzustellen, wobei sich das mindestens eine Fülllicht nahe dem mindestens einen Bilderfassungsteil befindet.

14. Schwimmbeckenroboter nach einem der Ansprüche 1 bis 8, ferner umfassend eine Hauptwasserpumpe, wobei die Hauptwasserpumpe Folgendes umfasst:
ein Hauptpumpenrad (1061a), das innerhalb des Körpers bereitgestellt ist; und
einen Hauptmotor (1061b), der dazu konfiguriert ist, das Hauptpumpenrad anzutreiben, damit es sich dreht, wobei, wenn sich der Schwimmbeckenroboter in einem Reinigungsmodus befindet, die Hauptwasserpumpe in Betrieb ist.

## Revendications

1. Robot de piscine (1000), comprenant :
un corps (1001) ;
deux mécanismes mobiles (1071) prévus sur deux côtés du corps, dans lequel chaque mécanisme mobile comprend :
deux roues mobiles ;
une voie (117) enroulée autour des deux roues mobiles ; et
une plaque de recouvrement extérieure (1174), la plaque de recouvrement extérieure étant configurée de manière à au moins couvrir les deux roues mobiles ; et
un ensemble propulsif latéral (115), l'ensemble propulsif latéral comprenant :
un canal d'écoulement latéral (115a) muni d'une entrée de fluide (115d) et d'une ouverture de pulvérisation de fluide (115e) ;
une turbine latérale (115c) prévue à l'intérieur du canal d'écoulement latéral ; et
un moteur latéral (115b) configuré de manière à entraîner la turbine latérale en rotation,
**caractérisé en ce que**
l'ouverture de pulvérisation de fluide (115e) est prévue sur la plaque de recouvrement extérieure (1174) d'un mécanisme mobile,
ou la plaque de recouvrement extérieure (1174) d'un mécanisme mobile est munie d'une ouverture permettant à l'ouverture de pulvérisation de fluide (115e) de communiquer avec l'extérieur à travers l'ouverture.

2. Robot de piscine selon la revendication 1, dans lequel l'entrée de fluide est prévue sur l'autre mécanisme mobile, de sorte que le canal d'écoulement latéral traverse les deux mécanismes mobiles,
dans lequel une zone est formée entre la voie et les deux roues mobiles ; et
le canal d'écoulement latéral est au moins partiellement situé dans la zone.

3. Robot de piscine selon la revendication 2, dans lequel l'entrée de fluide est prévue sur la plaque de recouvrement extérieure de l'autre mécanisme mobile, ou la plaque de recouvrement extérieure de l'autre mécanisme mobile est munie d'un trou d'évitement ou d'une grille d'évitement, de sorte que l'entrée de fluide communique avec l'extérieur à travers le trou d'évitement ou la grille d'évitement.

4. Robot de piscine selon la revendication 1, dans lequel une zone est formée entre la voie et les deux roues mobiles, et le canal d'écoulement latéral est au moins partiellement situé dans la zone.

5. Robot de piscine selon la revendication 4, dans lequel, lorsque le robot de piscine est projeté sur une surface verticale dans une direction allant d'un côté gauche du robot de piscine à un côté droit du robot de piscine ou dans une direction latérale du robot de piscine, une projection de l'ouverture s'inscrit dans une projection de la zone, ou une projection de l'ouverture de pulvérisation de fluide s'inscrit dans la projection de la zone.

6. Robot de piscine selon l'une des revendications 4 à 5, dans lequel la plaque de recouvrement extérieure est en outre configurée de manière à couvrir au moins une partie de la zone.

7. Robot de piscine selon l'une des revendications 4 à 6, dans lequel l'ouverture est un trou d'évitement ou une grille d'évitement.

8. Robot de piscine selon l'une des revendications 1 à 7, dans lequel le corps comprend une première cavité de réception (10013), et le robot de piscine comprend en outre un boîtier de filtrage (1051) au moins partiellement prévu à l'intérieur de la première cavité de réception, dans lequel l'entrée de fluide communique avec la première cavité de réception, permettant au liquide dans la première cavité de réception d'entrer dans le canal d'écoulement latéral.

9. Robot de piscine selon l'une des revendications 1 à 7, dans lequel le corps comprend une première cavité de réception (10013) et une deuxième cavité de réception (10014), et le robot de piscine comprend en outre un boîtier de filtrage au moins partiellement prévu à l'intérieur de la première cavité de réception et une pompe à eau principale (1061) prévue à l'intérieur de la deuxième cavité de réception, dans lequel
la pompe à eau principale est configurée de manière à entraîner le liquide d'une piscine à entrer dans le boîtier de filtrage afin d'être filtré et à entraîner le liquide filtré afin d'être évacué du corps ; et
l'entrée de fluide communique avec la deuxième cavité de réception, permettant au liquide dans la deuxième cavité de réception d'entrer dans le canal d'écoulement latéral.

10. Robot de piscine selon l'une des revendications 1 à 7, dans lequel le corps comprend une deuxième cavité de réception, et le robot de piscine comprend en outre un ensemble d'alimentation électrique prévu à l'intérieur de la deuxième cavité de réception, dans lequel l'ensemble d'alimentation électrique est configuré de manière à alimenter le robot de piscine ; et
l'entrée de fluide communique avec la deuxième cavité de réception, permettant au liquide dans la deuxième cavité de réception d'entrer dans le canal d'écoulement latéral.

11. Robot de piscine selon l'une des revendications 1 à 10, dans lequel l'ouverture de pulvérisation de fluide est pourvue d'une grille.

12. Robot de piscine selon l'une des revendications 1 à 7, comprenant en outre :
un boîtier de filtrage au moins partiellement prévue à l'intérieur du corps ;
une première entrée d'eau (1031) prévue sur un fond du corps ;
une première sortie d'eau (1041) au moins partiellement prévue sur un sommet du corps ; et
une pompe à eau principale prévue à l'intérieur du corps, dans lequel
la première entrée d'eau, le boîtier de filtrage, la pompe à eau principale et la première sortie d'eau sont séquentiellement en communication fluidique pour former un circuit d'eau de nettoyage.

13. Robot de piscine selon l'une des revendications 1 à 12, comprenant en outre :
au moins une partie de capture d'image (1010) configurée de manière à capturer une image ;
au moins une partie de détection de distance (1009) configurée de manière à détecter au moins une distance entre le robot de piscine et un objet, ladite au moins une partie de détection de distance étant située en dessous de ladite au moins une partie de capture d'image dans une direction de hauteur du robot de piscine ; et
au moins une lumière de remplissage (1011) configurée de manière à ajuster au moins la luminosité d'une zone visée de ladite au moins une partie de capture d'image, ladite au moins une lumière de remplissage étant proche de ladite au moins une partie de capture d'image.

14. Robot de piscine selon l'une des revendications 1 à 8, comprenant en outre une pompe à eau principale, la pompe à eau principale comprenant :
une turbine principale (1061a) prévue à l'intérieur du corps ; et
un moteur principal (1061b) configuré de manière à entraîner la turbine principale en rotation,
dans lequel, lorsque le robot de piscine est en mode de nettoyage, la pompe à eau principale fonctionne.
